# EUROPÄISCHE PATENTSCHRIFT

(11) **EP 3 980 310 B1**
(45) Veröffentlichungstag und Bekanntmachung des Hinweises auf die Patenterteilung: **09.08.2023**
(21) Anmeldenummer: 20732139.9
(22) Anmeldetag: 03.06.2020
(51) Int. Cl.: B60W 50/08, B60W 50/14

(54) **VERFAHREN ZUM BETRIEB EINES KRAFTFAHRZEUGS, COMPUTERPROGRAMMPRODUKT UND KRAFTFAHRZEUG**
METHOD FOR OPERATING A MOTOR VEHICLE, COMPUTER PROGRAM PRODUCT AND MOTOR VEHICLE
PROCÉDÉ POUR FAIRE FONCTIONNER UN VÉHICULE À MOTEUR, PRODUIT-PROGRAMME INFORMATIQUE ET VÉHICULE À MOTEUR

(30) Priorität: 05.06.2019 DE 102019208212
(43) Veröffentlichungstag der Anmeldung: 13.04.2022
(73) Patentinhaber: Audi AG, 85045 Ingolstadt (DE)
(72) Erfinder: NEWMAN, John, 85049 Ingolstadt (DE)
(86) Internationale Anmeldenummer: PCT/EP2020/065334
(87) Internationale Veröffentlichungsnummer: WO 2020/245189

(56) Entgegenhaltungen:
- DE-A1-102010 063 792
- DE-A1-102011 087 043
- DE-A1-102017 006 589
- US-A1- 2017 369 073
- US-B2- 10 202 127

## Beschreibung

Die Erfindung betrifft ein Verfahren zum Betrieb eines Kraftfahrzeugs. Des Weiteren betrifft die Erfindung ein Computerprogrammprodukt sowie ein Kraftfahrzeug. Zum Stand der Technik wird verwiesen auf die DE 10 2010 063 792 A (offenbart ein automatisches Auswählen von jeweils zur Fahrsituation passenden Assistenzfunktionen bzw. -systemen), US 10 202 127 B (offenbart eine Konfiguration von Assistenzfunktionen abhängig von Fahrer und Fahrstil) und DE 10 2017 006 589 A.

Moderne Kraftfahrzeuge, insbesondere landgestützte Kraftfahrzeuge wie zum Beispiel Personenkraftwagen weisen häufig eine Vielzahl von Fahrerassistenzsystemen auf, die den Fahrer unterstützen und/oder in Risikosituationen warnen sowie gegebenenfalls zur Vermeidung eines Unfalls eingreifen. Für die reine Unterstützung des Fahrers dienen beispielsweise Geschwindigkeits-Regelsysteme, die das Kraftfahrzeug auf einem fahrerseitig vorgegebenen Geschwindigkeitswert halten. Auch kommen Spurhalteassistenten zum Einsatz, die in einfacher Ausführung lediglich eine Warnung an den Fahrer bei augenscheinlich unerwünschtem Verlassen der Fahrspur ausgeben oder in weiterentwickelter Ausführung auch gegenlenken. Ferner kommen auch Bremsassistenten zum Einsatz, die bei zu dichtem Auffahren auf ein vorausfahrendes Fahrzeug oder Annäherung an ein Hindernis eine Bremsung einleiten. Die letzteren Systeme sollen also helfen, Unfälle zu verhindern.

Es liegen derzeit auch Hinweise vor, dass ein signifikanter Anteil von Unfällen unter Nicht-Tageslicht-Bedingungen erfolgt. Auch Bedingungen mit eingeschränkter Sicht, beispielsweise aufgrund von Nebel, Schnee aber auch Blendung durch Sonnenlicht können zu einem erhöhten Unfallrisiko beitragen. Deshalb werden mittlerweile auch Systeme angeboten, die auch bei schlechter Sicht eine Gefahrenerkennung insbesondere über den aktuellen visuellen Sichthorizont hinaus ermöglichen sollen. Dabei handelt es sich meist um Infrarot- oder Wärmebildgebungssysteme.

Nachteilig bei der Annahme solcher Systeme durch die Fahrzeugnutzer (d. h. den jeweiligen Fahrer) ist dabei teilweise eine mangelhafte Selbsteinschätzung und/oder eine ablehnende oder zumindest misstrauische Haltung gegenüber technischen Neuerungen.

Der Erfindung liegt die Aufgabe zugrunde, den Betrieb eines Kraftfahrzeugs zu verbessern.

Diese Aufgabe wird erfindungsgemäß gelöst durch ein Verfahren mit den Merkmalen des Anspruchs 1. Des Weiteren wird diese Aufgabe erfindungsgemäß gelöst durch ein Computerprogrammprodukt mit den Merkmalen des Anspruchs 9. Außerdem wird diese Aufgabe erfindungsgemäß gelöst durch ein Kraftfahrzeug mit den Merkmalen des Anspruchs 10. Weitere vorteilhafte und teils für sich erfinderische Ausführungsformen und Weiterbildungen der Erfindung sind in den Unteransprüchen sowie der nachfolgenden Beschreibung dargelegt.

Das erfindungsgemäße Verfahren dient zum Betrieb eines insbesondere landgestützten Kraftfahrzeugs, vorzugsweise einem Personenkraftwagen. Verfahrensgemäß werden dabei mittels einer Anzahl von Umfeldsensoren (insbesondere des Kraftfahrzeugs) Situationsgrößen erfasst. Mittels eines Controllers (auch als Steuergerät oder Steuereinheit bezeichnet) wird aus der Anzahl der Situationsgrößen eine aktuelle Fahrsituation abgeleitet. D. h. der Controller bestimmt, in welcher Fahrsituation sich das Kraftfahrzeug und somit auch der Fahrer aktuell befinden. Außerdem wird eine Anzahl von zur Steuerung des Kraftfahrzeugs dienenden Steuereingaben erfasst. Anhand dieser Steuereingaben wird mittels des Controllers ein Verhaltensmuster für einen spezifischen Fahrer (insbesondere den mittels eines vorzugsweise codierten Schlüssels am Controller angemeldeten Fahrer) ermittelt. Dieses Verhaltensmuster wird der aktuellen Fahrsituation zugeordnet und in einer Speichereinheit des Controllers hinterlegt. Für den Fall, dass anhand der Situationsgrößen auf eine beschränkte Sicht geschlossen wird, wird das für die aktuelle Fahrsituation ermittelte Verhaltensmuster mit einem für eine Fahrsituation bei uneingeschränkter Sicht ermittelten Verhaltensmuster desselben Fahrers hinsichtlich einer Unsicherheit (insbesondere im Fahrverhalten) verglichen. Bei auf Basis dieses Vergleichs erkannter Unsicherheit des Fahrers wird diesem, insbesondere seitens des Controllers, die Nutzung eines Sichtverbesserungssystems empfohlen.

Vorzugsweise wird auf Basis des Vergleichs eine Wahrscheinlichkeit (insbesondere ein Wahrscheinlichkeitswert) für das Vorliegen der Unsicherheit ermittelt. Insbesondere bei Überschreiten eines vorgegebenen Wahrscheinlichkeitswert wird angenommen, dass die Unsicherheit vorliegt.

Die Empfehlung zur Nutzung ist vorzugsweise darauf gerichtet, ein solches System für das Kraftfahrzeug zu kaufen. Der Kauf kann dabei wiederum den Zukauf eines entsprechenden Moduls oder aber auch die Freischaltung eines bereits verbauten Systems umfassen. Alternativ ist die Empfehlung zur Nutzung darauf gerichtet, ein vorhandenes (und insbesondere bereits freigeschaltetes) System bei erkannter Unsicherheit "sofort" einzusetzen.

Die Erfindung ermöglicht somit eine individualisierte Empfehlung zur Nutzung eines solchen Sichtverbesserungssystems. Für den Fall, dass der spezifische Fahrer keine Unsicherheit in seinem Fahrverhalten gegenüber Situationen mit uneingeschränkter Sicht zeigt, kann somit die (vom nicht verunsicherten Fahrer potentiell als störend empfundene) Empfehlung unterbleiben. Eine Störung des Fahrers durch das Vorbringen der vorstehend beschriebenen Empfehlung würde in diesem Fall somit vorteilhafterweise entfallen.

In einer bevorzugten Verfahrensvariante wird das Verhaltensmuster insbesondere auf von dem (spezifischen) Fahrer häufig genutzten Fahrwegen ermittelt. D. h. der Controller ermittelt beispielsweise anhand von Navigationsdaten, ob die aktuelle Straße von dem jeweiligen Fahrer häufig genutzt wird, insbesondere anhand einer Anzahl der Nutzungen innerhalb eines vorgegebenen Zeitraums. Eine Abweichung im Verhaltensmuster bei - abgesehen von den unterschiedlichen Sichtverhältnissen - vergleichbaren Umgebungsbedingungen, insbesondere eine vergleichbare Verkehrsdichte, lässt auf vergleichsweise einfache Weise einen Rückschluss auf eine sichtbedingte Unsicherheit zu, da beispielsweise Faktoren wie Ortsunkenntnis vernachlässigt werden können. Außerdem kann so bei wiederholter Ermittlung des Verhaltensmusters eine statistisch höhere Sicherheit erzielt werden.

In einer zweckmäßigen Verfahrensvariante wird als Steuereingabe zur Steuerung des Kraftfahrzeugs eine fahrerseitige Betätigung der Bremse, eine fahrerseitige Vorgabe einer Fahrgeschwindigkeit (insbesondere mittels des Gaspedals oder mittels eines Geschwindigkeitswahlschalters eines Geschwindigkeits-Regelungssystems) und/oder eine fahrerseitige Betätigung der Lenkvorrichtung, insbesondere des Lenkrads herangezogen.

In einer bevorzugten Weiterbildung der vorstehend genannten Verfahrensvariante wird die oder die jeweilige Steuereingabe zur Ermittlung des Verhaltensmusters zusätzlich mit durch den aktuellen Fahrweg und/oder die Umgebungssituation vorgegebenen Randbedingungen abgeglichen. Bei diesen Randbedingungen handelt es sich beispielsweise um Geschwindigkeitsbegrenzungen, Breite der Fahrbahn, Kurvigkeit des Fahrwegs, Verkehrsdichte und dergleichen. Insbesondere wird dabei auch berücksichtigt, dass Geschwindigkeitsbegrenzungen gegebenenfalls nur zeitlich begrenzt, insbesondere während der Nachtstunden (bspw. zwischen 22 und 6 Uhr) gültig sind. Vorzugsweise wird der Wahrscheinlichkeitswert für das Vorliegen einer Unsicherheit in dem Fall nicht erhöht, in dem der Fahrer aufgrund einer solchen zeitlich begrenzten Geschwindigkeitsbegrenzung mit vergleichsweise geringer Fahrgeschwindigkeit fährt.

Vorzugsweise wird die oder die jeweilige Steuerangabe dabei mit Situationsgrößen, die mittels der Umfeldsensoren erfasst werden, zusammengefasst. Beispielsweise wird die nutzerseitig gewählte Fahrgeschwindigkeit mit einer optisch oder über Navigationsdaten erfassten Kurvigkeit des Fahrwegs und/oder der (insbesondere optisch) detektierten Verkehrsdichte in Relation gesetzt. Ebenso wird beispielsweise ein Überholverhalten mit der Verkehrsdichte und/oder der Kurvigkeit in Relation gesetzt.

Bei der Ermittlung der Unsicherheit lässt zum Beispiel eine im Vergleich zu guter Sicht geringere Fahrgeschwindigkeit bei gerader Strecke und unbegrenzter Geschwindigkeit (sowie bei geringer Verkehrsdichte) auf eine Unsicherheit schließen. Ebenso werden im Vergleich zu guter Sicht häufigere, kleine Lenkbewegungen und/oder häufige vergleichsweise kleine Bremseingriffe als Hinweis auf eine Unsicherheit gewertet.

Optional wird auch eine (insbesondere über den Fahrersitz hinausgehende) Sitzbelegung des Kraftfahrzeugs oder andere Einflüsse auf den Fahrer (bspw. ein laufendes Telefonat) berücksichtigt. Insbesondere werden dazu Sitzbelegungssensoren ausgelesen. Beispielswiese wird in diesem Fall bei schlechten Sichtverhältnissen ein "vorsichtigeres" (insbesondere langsameres) Fahren bei zusätzlichen Fahrzeuginsassen im Vergleich zu einem "Alleine-Fahren" oder bspw. während eines laufenden Telefonats (insbesondere über eine Freisprecheinrichtung) nicht direkt als Unsicherheit gewertet (und somit insbesondere der Wahrscheinlichkeitswert für die Unsicherheit nicht erhöht).

In einer weiteren zweckmäßigen Verfahrensvariante wird - insbesondere zusätzlich zu den vorstehend beschriebenen fahrerseitigen Steuereingaben - als (vorzugsweise weitere) Steuereingabe ein Eingreifen eines aktiven Fahrsicherheitsassistenzsystems, insbesondere eines Spurhalteassistenten und/oder eines Bremsassistenten herangezogen. Ein solches Eingreifen erfolgt regelmäßig in Fällen, in denen der Fahrer bspw. aus Gründen fehlender Übersicht potentielle Risikofaktoren nicht berücksichtigt oder nicht erkennt. Somit wird vorzugsweise in Verbindung mit der vorstehend beschriebenen Berücksichtigung von fahrerseitigen Steuereingaben ein Eingreifen eines aktiven Fahrsicherheitsassistenzsystems herangezogen, um einen Wahrscheinlichkeitswert für eine Unsicherheit des Fahrers zu erhöhen. Dadurch kann die Präzision bei der Erkennung der Unsicherheit erhöht werden.

In einer weiteren zweckmäßigen Verfahrensvariante wird bei erkannter Unsicherheit insbesondere bei Dunkelheit die Nutzung eines Nachtsichtsystems als Sichtverbesserungssystem empfohlen. Bspw. wird als Nachtsichtsystem ein Wärmebildgerät oder ein Restlichtverstärker, optional auch eine Kombination aus diesen herangezogen.

In einer optionalen Verfahrensvariante wird auch bei Unsicherheit bei einem vergleichsweise hohen Helligkeitswert - bspw. aufgrund von blendender Sonneneinstrahlung - die Nutzung eines Sichtverbesserungssystems, insbesondere in Form eines Verdunklungssystems, einer (vorzugsweise teiltransparenten) Sonnenblende oder dergleichen empfohlen.

Vorzugsweise werden zur Ausgabe der Empfehlung zur Nutzung des Sichtverbesserungssystems auch persönliche Informationen des spezifischen Fahrers berücksichtigt. Bei derartigen Informationen handelt es sich insbesondere darum, ob der Fahrer offen gegenüber technischen Weiterentwicklungen (bspw. ein sogenannter "early adopter", der technische Neuerungen zeitnah selbst nutzen möchte) ist. In diesem Fall wird die Empfehlung bspw. bereits bei einer geringen Wahrscheinlichkeit für eine Unsicherheit bei schlechten Sichtverhältnissen ausgegeben. Ist der Fahrer eher ablehnend oder misstrauisch gegenüber Neuentwicklungen, wird die Empfehlung hingegen bspw. erst bei einer höheren Wahrscheinlichkeit für die Unsicherheit ausgegeben.

Zweckmäßigerweise wird insbesondere vor einer erneuten Ausgabe der Empfehlung zur Nutzung des Sichtverbesserungssystems auch eine Reaktion des Fahrers auf die bereits ergangene Empfehlung berücksichtigt. Für den Fall, dass der Fahrer das Sichtverbesserungssystem auf die vorhergehende Empfehlung nicht aktiviert (genutzt) hat, oder gegebenenfalls einen (bspw. über ein Multifunktionsdisplay ausgegebenen) entsprechenden Hinweis verworfen oder abgelehnt hat, unterbleibt bspw. eine weitere Empfehlung in einem vergleichbaren Fall.

In bevorzugter Verfahrensvariante werden als Umfeldsensoren insbesondere eine Kamera (optional mit Eignung zur Erzeugung eines Nachtsicht-Bildes) und/oder ein Lichtsensor herangezogen. Als Situationsgröße wird dabei wenigstens eine Helligkeit und/oder eine Sichtweite, sowie optional eine Verkehrsdichte erfasst.

Insbesondere für den Fall, dass ein bereits verbautes, aber noch nicht freigegebenes Sichtverbesserungssystem vorhanden ist, wird dem Fahrer im Rahmen der Empfehlung eine kostenfreie Testphase des Sichtverbesserungssystems angeboten. In diesem Fall kann der Fahrer vorteilhafterweise testen, ob ein solches Sichtverbesserungssystem ihm hilft, die erkannte Unsicherheit zu überwinden.

In einer zweckmäßigen Verfahrensvariante wird die Empfehlung zur Nutzung des Sichtverbesserungssystems auch auf andere Kraftfahrzeuge des Fahrers ausgedehnt. Bspw. sind über eine Art Kundenkonto mehrere Kraftfahrzeuge für denselben Fahrer hinterlegt. In diesem Fall wird die Empfehlung in dem Kundenkonto - bspw. unter Angabe der zugeordneten Sichtbedingungen und/oder Rahmenbedingungen - hinterlegt, so dass ein anderes Kraftfahrzeug die Empfehlung für vergleichbare Situationen übernehmen kann. Insbesondere wird über das Kundenkonto bspw. bei einer Anschaffung eines weiteren Kraftfahrzeugs (oder einer Anmietung eines Mietfahrzeugs) durch den Fahrer die Ausstattung dieses Kraftfahrzeugs mit einem entsprechenden Sichtverbesserungssystem vorgeschlagen.

In einer weiteren zweckmäßigen Verfahrensvariante werden Informationen vorzugsweise von anderen Kraftfahrzeugen, bspw. einer Kraftfahrzeugflotte oder dergleichen, dazu eingeholt, welcher Zeitpunkt (bspw. bei, vorzugsweise kurz vor Fahrtantritt, während der Fahrt selbst oder dergleichen) für die Befolgung der Empfehlung erfolgversprechend ist. Insbesondere kann bereits bei Fahrtantritt - sofern bspw. aufgrund der Uhrzeit und/oder der erfassten Helligkeit eine erhöhte Wahrscheinlichkeit für die Unsicherheit zu erwarten ist - die Empfehlung abgegeben werden. Der Fahrer hat in diesem Fall die Möglichkeit, vor Fahrtantritt das Sichtverbesserungssystem aktiv zu schalten.

Das erfindungsgemäße Computerprogrammprodukt weist Programmcode auf, durch dessen Ausführung auf dem Controller dieser veranlasst wird, das vorstehend beschriebene Verfahren insbesondere automatisch auszuführen.

Das erfindungsgemäße Kraftfahrzeug weist die vorstehend beschriebene Anzahl von Umgebungssensoren sowie den Controller auf. Letzterer ist dazu eingerichtet, das vorstehend beschriebene Verfahren durchzuführen.

In bevorzugter Ausgestaltung ist der Controller zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit dem Fahrer - bei Ausführung der Betriebssoftware in dem Mikrocontroller automatisch durchgeführt wird.

Das Kraftfahrzeug weist somit die vorstehend beschriebene Merkmale und Vorteile gleichermaßen auf.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

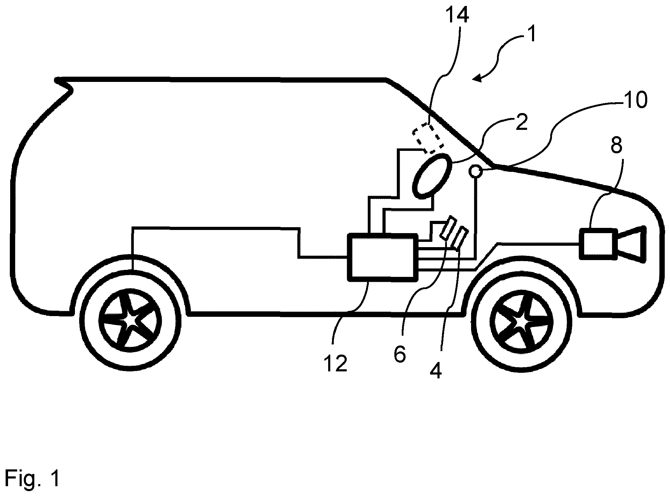

Nachfolgend wird ein Ausführungsbeispiel der Erfindung anhand einer Zeichnung näher erläutert. Darin zeigt die einzige Figur, Fig. 1, in einer schematischen Seitenansicht ein Kraftfahrzeug.

In Fig. 1 ist schematisch ein Kraftfahrzeug, im Folgenden kurz als "PKW 1" dargestellt. Der PKW 1 umfasst zur Steuerung ein Lenkrad 2, ein Gaspedal 4 und ein Bremspedal 6. Des Weiteren umfasst der PKW 1 ein Sensorsystem 8 zur Überwachung des Umfelds des PKWs 1. Dieses Sensorsystem 8 ist beispielhaft durch eine Kamera dargestellt, umfasst neben dieser aber auch weitere Umfeldsensoren, zum Beispiel Radarsensoren zur Abstandsermittlung gegenüber anderen Fahrzeugen und Hindernissen. Im Rahmen dieses Sensorsystems 8 umfasst der PKW 1 auch einen separat dargestellten Lichtsensor 10. Außerdem umfasst der PKW 1 einen Controller 12. Auf diesen sind die Umfeldsensoren des Sensorsystems 8 aufgeschaltet. Des Weiteren greift der Controller 12 Betätigungen des Lenkrads 2, des Gas- und des Bremspedals 6 ab. Ebenfalls ermittelt der Controller 12 die aktuelle Fahrgeschwindigkeit, konkret den aktuellen Wert der Fahrgeschwindigkeit.

Im Betrieb des PKWs 1 werden dem Controller 12 von den Umfeldsensoren des Sensorsystems 8 Situationsgrößen übermittelt. Bei diesen Situationsgrößen handelt es sich beispielsweise um einen mittels des Lichtsensors 10 ermittelten Helligkeitswert, die Abstände zu umliegenden Fahrzeugen, aktuelle Geschwindigkeitsbegrenzungen, die Geradheit (oder: Kurvigkeit) des aktuellen Fahrwegs - die vorzugsweise mittels eines nicht näher dargestellten Navigationssystems ermittelt wird - und dergleichen. Der Controller 12 erstellt anhand dieser Situationsgrößen eine aktuelle Fahrsituation, in der sich der PKW 1 und somit auch der Fahrer des PKWs 1 befinden.

Anhand der Steuereingaben, die der Controller 12 von dem Lenkrad 2, dem Gas- und dem Bremspedal 4, 6 abgreift, anhand der aktuellen Fahrgeschwindigkeit sowie auch anhand von Eingriffen von Fahrersicherheitssystemen, beispielsweise einem Bremsassistenten, einem Spurhalteassistenten (nicht näher dargestellt) erstellt der Controller 12 ein Verhaltensmuster des spezifischen Fahrers für die aktuelle Fahrsituation.

Mittels der Umfeldsensoren des Sensorsystems 8 ermittelt der Controller 12 - auch bei der Bestimmung der aktuellen Fahrsituation - wie aktuell die Sichtbedingungen außerhalb des PKWs 1 sind. Kommt der Controller 12 zu dem Schluss, dass aktuell außerhalb des PKWs 1 aufgrund von Dunkelheit (oder beispielsweise auch aufgrund von Schnee oder Nebel) eingeschränkte Sichtbedingungen vorliegen, vergleicht der Controller 12 das aktuelle Verhaltensmuster mit für bei uneingeschränkten Sichtbedingungen in einer Speichereinheit des Controller 12 abgespeicherten und dem spezifischen Fahrer zugeordneten Verhaltensmustern.

Bei diesem Vergleich überprüft der Controller 12, ob sich aus dem Verhaltensmuster bei eingeschränkten Sichtbedingungen auf eine Unsicherheit des Fahrers schließen lässt. Dazu zieht der Controller 12 zum Vergleich heran, ob der Fahrer bei eingeschränkten Sichtbedingungen trotz freier Fahrt (d. h. bei keinem, langsam vorausfahrenden Fahrzeug) auf der gleichen Strecke mit geringerer Geschwindigkeit im Vergleich zu uneingeschränkten Sichtbedingungen fährt, häufiger die Bremse betätigt und/oder häufiger Lenkeingriffe vornimmt. Zusätzlich überprüft der Controller 12, ob Fahrsicherheitssysteme, konkret der Spurhalteassistent und/oder der Bremsassistent bei eingeschränkter Sicht überhaupt oder häufiger eingreifen. Derartige "Merkmale" deuten nämlich auf eine Unsicherheit des Fahrers bei eingeschränkter Sicht hin.

Erkennt der Controller 12 anhand des vorstehend beschriebenen Vergleichs, dass der Fahrer sich bei eingeschränkter Sicht unsicherer im Vergleich zu uneingeschränkter Sicht fühlt und sich dies mithin in seinem (Fahr-) Verhaltensmuster niederschlägt, schlägt der Controller 12 dem Fahrer die Nutzung eines Sichtverbesserungssystems, für Dunkelheit konkret eines Nachtsichtsystems vor.

Nutzt der Fahrer daraufhin - bei Dunkelheit - das Nachtsichtsystem, beispielsweise indem der Fahrer die bereits im PKW 1 vorhandene Funktion freischalten lässt oder ein entsprechendes Modul zukauft, werden vom Controller 12 mittels der vorstehend beschriebenen Kamera oder einer weiteren, speziellen Kamera für das bloße Auge nicht sichtbare Informationen (beispielsweise mittels Infrarot) erfasst und im Blickfeld des Fahrers in einer Anzeige 14 wiedergegeben.

Optional handelt es sich bei der Anzeige 14 um einen Bildschirm. Alternativ handelt es sich bei der Anzeige 14 um einen Anzeigebereich eines Head Up Displays.

Der Gegenstand der Erfindung ist nicht auf das vorstehend beschriebene Ausführungsbeispiel beschränkt. Vielmehr können weitere Ausführungsformen der Erfindung von dem Fachmann aus der vorstehenden Beschreibung abgeleitet werden.

### BEZUGSZEICHENLISTE:

- 1: PKW
- 2: Lenkrad
- 4: Gaspedal
- 6: Bremspedal
- 8: Sensorsystem
- 10: Lichtsensor
- 12: Controller
- 14: Anzeige

## Patentansprüche

1. Verfahren zum Betrieb eines Kraftfahrzeugs (1), wobei verfahrensgemäß
- mittels einer Anzahl von Umfeldsensoren (8,10) Situationsgrößen erfasst werden,
- mittels eines Controllers (12) aus der Anzahl der Situationsgrößen eine aktuelle Fahrsituation abgeleitet wird,
- eine Anzahl von zur Steuerung des Kraftfahrzeugs (1) dienenden Steuereingaben erfasst wird,
- mittels des Controllers (12) anhand der Steuereingaben ein Verhaltensmuster für einen spezifischen Fahrer ermittelt, der aktuellen Fahrsituation zugeordnet und in einer Speichereinheit des Controllers (12) hinterlegt wird,
- für den Fall, dass anhand der Situationsgrößen auf eine beschränkte Sicht geschlossen wird, das für die aktuelle Fahrsituation ermittelte Verhaltensmuster mit einem für eine Fahrsituation bei uneingeschränkter Sicht ermittelten Verhaltensmuster desselben Fahrers hinsichtlich einer Unsicherheit verglichen wird, und
- bei auf Basis des Vergleichs erkannter Unsicherheit des Fahrers diesem die Nutzung eines Sichtverbesserungssystems empfohlen wird.

2. Verfahren nach Anspruch 1,
wobei das Verhaltensmuster auf von dem Fahrer häufig genutzten Fahrwegen ermittelt wird.

3. Verfahren nach Anspruch 1 oder 2,
wobei als Steuereingabe eine fahrerseitige Betätigung der Bremse, eine fahrerseitige Vorgabe einer Fahrgeschwindigkeit und/oder eine fahrerseitige Betätigung der Lenkvorrichtung (2) herangezogen wird.

4. Verfahren nach Anspruch 3,
wobei die Steuereingabe zur Ermittlung des Verhaltensmusters zusätzlich mit durch den aktuellen Fahrweg vorgegebenen Randbedingungen abgeglichen wird.

5. Verfahren nach einem der Ansprüche 1 bis 4,
wobei als Steuereingabe ein Eingreifen eines aktiven Fahrsicherheitsassistenzsystems, insbesondere eines Spurhalteassistenten und/oder eines Bremsassistenten herangezogen wird.

6. Verfahren nach einem der Ansprüche 1 bis 5,
wobei bei erkannter Unsicherheit bei Dunkelheit die Nutzung eines Nachtsichtsystems als Sichtverbesserungssystems empfohlen wird.

7. Verfahren nach einem der Ansprüche 1 bis 6,
wobei zur Ausgabe der Empfehlung persönliche Informationen des spezifischen Fahrers, insbesondere dessen Offenheit gegenüber technischen Weiterentwicklungen und/oder eine Reaktion des Fahrers auf eine bereits erfolgte Empfehlung zur Nutzung des Sichtverbesserungssystems berücksichtigt werden.

8. Verfahren nach einem der Ansprüche 1 bis 7,
wobei als Umfeldsensoren eine Kamera und/oder ein Lichtsensor (10) herangezogen werden und wobei als Situationsgröße wenigstens eine Helligkeit und/oder eine Sichtweite erfasst wird.

9. Computerprogrammprodukt mit Programmcode, durch den bei der Ausführung des Programms durch einen Controller (12) dieser veranlasst wird, das Verfahren nach einem der Ansprüche 1 bis 8 auszuführen.

10. Kraftfahrzeug (1) mit einer Anzahl von Umgebungssensoren (8,10) und mit einem Controller (12), der dazu eingerichtet ist das Verfahren nach einem der Ansprüche 1 bis 8 durchzuführen.

## Claims

1. Method for operating a motor vehicle (1), wherein according to the method
- situation variables are detected by means of a number of environment sensors (8, 10),
- a current driving situation is derived from the number of situation variables by means of a controller (12),
- a number of control inputs used to control the motor vehicle (1) are detected,
- a behaviour pattern for a specific driver is determined by means of the controller (12) on the basis of the control inputs, is assigned to the current driving situation, and is stored in a memory unit of the controller (12),
- should it be concluded on the basis of the situation variables that the view is restricted, the lack of safety of the behaviour pattern determined for the current driving situation is compared with that of a behaviour pattern for the same driver determined for a driving situation with an unrestricted view, and
- the use of a view enhancement system is recommended if a lack of safety for the driver is identified on the basis of the comparison.

2. Method according to claim 1,
wherein the behaviour pattern on routes frequently used by the driver is determined.

3. Method according to claim 1 or 2,
wherein a driver-side actuation of the brake, a driver-side specification of a driving speed and/or a driver-side actuation of the steering device (2) is used as the control input.

4. Method according to claim 3,
wherein the control input for determining the behaviour pattern is additionally compared with boundary conditions specified by the current route.

5. Method according to any one of claims 1 to 4,
wherein an intervention by an active driving safety assistance system, in particular a lane departure warning system and/or a brake assistant, is used as the control input.

6. Method according to any one of claims 1 to 5,
wherein the use of a night vision system is recommended as the view enhancement system if a lack of safety in the dark is identified.

7. Method according to any one of claims 1 to 6,
wherein, in order to issue the recommendation, personal information about the specific driver, in particular his or her openness to further technical developments and/or a reaction of the driver to a previously issued recommendation to use the view enhancement system, is taken into account.

8. Method according to any one of claims 1 to 7,
wherein a camera and/or a light sensor (10) are used as the environment sensors and wherein at least a brightness and/or a visibility is detected as the situation variable.

9. Computer program product having program code which, when the program is executed by a controller (12), causes the latter to perform the method of any one of claims 1 to 8.

10. Motor vehicle (1) having a number of environment sensors (8, 10) and having a controller (12) which is configured to perform the method according to any one of claims 1 to 8.

## Revendications

1. Procédé de fonctionnement d'un véhicule automobile (1), dans lequel, selon le procédé
- des variables de situation sont détectées au moyen d'un certain nombre de capteurs d'environnement (8, 10),
- une situation de conduite actuelle est déduite au moyen d'un dispositif de commande (12) à partir du nombre de variables de situation,
- un certain nombre d'entrées de commande servant à la commande du véhicule automobile (1) est saisi,
- un modèle de comportement pour un conducteur spécifique est déterminé au moyen du dispositif de commande (12) au moyen des entrées de commande, est associé à la situation de conduite actuelle et est enregistré dans une unité de mémoire du dispositif de commande (12),
- dans le cas où les variables de situation permettent de conclure à une visibilité limitée, le modèle de comportement déterminé pour la situation de conduite actuelle est comparé à un modèle de comportement du même conducteur déterminé pour une situation de conduite avec une visibilité illimitée, relativement à une incertitude, et
- lorsque l'incertitude du conducteur est identifiée sur la base de la comparaison, il est recommandé au conducteur d'utiliser un système d'amélioration de la visibilité.

2. Procédé selon la revendication 1,
dans lequel le modèle de comportement est déterminé sur des trajets fréquemment empruntés par le conducteur.

3. Procédé selon la revendication 1 ou 2,
dans lequel un actionnement du frein par le conducteur, une consigne de vitesse de déplacement par le conducteur et/ou un actionnement du dispositif de direction (2) par le conducteur sont utilisés comme entrée de commande.

4. Procédé selon la revendication 3,
dans lequel l'entrée de commande pour la détermination du modèle de comportement est en outre comparée à des conditions marginales prédéfinies par le trajet actuel.

5. Procédé selon l'une quelconque des revendications 1 à 4,
dans lequel une intervention d'un système actif d'assistance à la conduite, en particulier d'un système de suivi de voie et/ou d'un système d'assistance au freinage, est utilisée comme entrée de commande.

6. Procédé selon l'une quelconque des revendications 1 à 5,
dans lequel, en cas d'insécurité reconnue dans l'obscurité, il est recommandé d'utiliser un système de vision nocturne à titre de système d'amélioration de la visibilité.

7. Procédé selon l'une quelconque des revendications 1 à 6,
dans lequel, pour émettre la recommandation, des informations personnelles du conducteur spécifique, en particulier son ouverture aux évolutions techniques et/ou une réaction du conducteur à une recommandation déjà faite d'utiliser le système d'amélioration de la visibilité, sont prises en compte.

8. Procédé selon l'une quelconque des revendications 1 à 7,
dans lequel une caméra et/ou un capteur de lumière (10) sont utilisés à titre de capteurs d'environnement et dans lequel au moins une luminosité et/ou une distance de visibilité sont détectées à titre de variables de situation.

9. Produit programme d'ordinateur avec code de programme par lequel, lors de l'exécution du programme par un dispositif de commande (12), ce dernier est amené à exécuter le procédé selon l'une quelconque des revendications 1 à 8.

10. Véhicule automobile (1) comprenant un certain nombre de capteurs d'environnement (8, 10) et un dispositif de commande (12) qui est conçu pour mettre en oeuvre le procédé selon l'une quelconque des revendications 1 à 8.
